# EUROPEAN PATENT APPLICATION

(11) **EP 4 725 671 A1**
(43) Date of publication of application: **15.04.2026**
(21) Application number: 25207462.0
(22) Date of filing: 08.10.2025
(51) Int. Cl.: B29B 17/02, C03B 33/033, B03B 9/06, B32B 43/00, B09B 3/30, B09B 3/40, B09B 101/15, B29L 9/00

(54) **METHOD AND MACHINE FOR THE RECOVERY OF GLASS MATERIAL FROM A DECOMMISSIONED PHOTOVOLTAIC PANEL**

(30) Priority: 09.10.2024 IT 202400022404
(71) Applicant: Barutek S.r.l., 24048 Treviolo (IT)
(72) Inventor: BOSIO, Valter, 24048 TREVIOLO (IT); BOSIO, Jair, 24048 TREVIOLO (IT)
(74) Representative: Tirloni, Bartolomeo

(57) **Abstract**

Machine (1) and method for the recovery of glass material from a decommissioned photovoltaic panel (5) comprising at least a covering layer (6) made of glass material and a support layer (7) made of polymer material having a first face (71) adjacent to and in contact with said covering layer (6), wherein the machine (1) comprises a compression station (2), a heating station (3) and a bending station (4), and wherein the method comprises compressing the photovoltaic panel (5) to generate at least one fracture line in the cover layer (6), heating the photovoltaic panel (5) to bring the support layer (7) to a temperature higher than a softening temperature of the polymer material and subsequent bending the photovoltaic panel (5) to generate a first bending moment acting on at least one portion of the support layer (7) with the first face (71) of the support layer (7) in compression to separate the glass material of the cover layer (6) from the first face (71) of the support layer (7).

## Description

### Technical field of the invention

The present invention relates to a method and a machine for the recovery of glass material from a decommissioned photovoltaic panel

### State of the art

Typically, a photovoltaic panel consists of a layered structure comprising, in sequence, an outer aluminum frame designed to provide structural support to the panel, protect its edges, and facilitate installation; a cover layer made of glass material (e.g., tempered glass); and a support layer made of polymer material (generally EVA - ethylene-vinyl acetate) to protect and encapsulate the underlying photovoltaic cells made of crystalline silicon or thin-film materials (such as cadmium telluride or copper indium gallium selenide), which absorb sunlight and convert it into electrical energy through the photovoltaic effect. The photovoltaic cells are typically supported by an additional backing layer comprising a polymer film (such as Tedlar^{™}) or an aluminum sheet.

Over time, the photovoltaic panel loses much of its initial efficiency and must be replaced.

### Summary of the invention

The terms "upstream", "downstream" and the like refer to the orientation of the photovoltaic panel during the recovery of the glass material.

Unless otherwise specified, the expression "recovery of the glass material" is understood to mean separating from the rest of the photovoltaic panel at least a portion of the glass material forming the panel's cover layer.

"Break line" refers to a fracture or crack generated on and/or within the glass cover layer, propagating in any direction and/or having any shape, including a shape closed upon itself, regardless of whether the crack extends (vertically) through the entire thickness of the cover layer or only through a portion of that thickness.

"Softening temperature" refers to a temperature at which a solid material (for example, a polymer) begins to lose its rigidity and take on a plastic and/or viscoelastic behavior. In this context, the Applicant has realized that it is particularly advantageous to dismantle the decommissioned photovoltaic panel by recovering one or more of its constituent materials, in order to recycle such constituent materials.

In particular, the Applicant considers it especially useful to be able to recover the glass material of the cover layer of the photovoltaic panel.

Indeed, the glass material typically accounts for about 70% of the weight of the photovoltaic panel and can be advantageously recycled and used for the production of new glass products.

Moreover, the Applicant has also recognized the need to recover this glass material from the panel with a high degree of purity, so as to enable its recycling while limiting the use of additional treatment steps on the glass material to achieve the desired level of purity (for example, to separate one or more possible contaminants). For instance, it is advantageous for the separated glass material to have, from the outset (i.e., from the very first separation from the rest of the panel), a purity level greater than or equal to 70% by weight and/or volume, and preferably greater than or equal to 90%.

In addressing the above-mentioned need to recover the glass material from the panel, the Applicant has realized that separating the glass of the cover layer from the rest of the panel by using mechanical means is particularly disadvantageous. For example, the use of tools (chisels, spatulas, scrapers, small hammers, milling cutters, etc.) to separate the glass material inevitably leads to wear of such tools, thereby requiring periodic maintenance and/or replacement, with resulting costs. Furthermore, the use of such tools depends on the specific preparation and configuration of the tools themselves, which typically complicates decommissioned-panel treatment plants.

The Applicant has therefore addressed the problem of recovering the glass material from a decommissioned photovoltaic panel in an efficient manner, for example achieving a high degree of purity of the recovered glass material, and/or a desired processing speed of the panel, and/or low costs, and/or limited structural complexity, for instance without the use of specific tools for separating said glass material.

According to the Applicant, the above problem is solved by a method and a corresponding machine for recovering glass material from a decommissioned photovoltaic panel, in accordance with the attached claims and/or having one or more of the following features.

According to one aspect, the invention relates to a method for recovering glass material from a decommissioned photovoltaic panel.

Preferably said photovoltaic panel comprises at least a cover layer made of glass material.

Preferably said photovoltaic panel comprises a support layer made of polymer material.

Preferably said support layer has a first face adjacent to and in contact with said cover layer.

Preferably said method comprises providing said photovoltaic panel.

Preferably said method comprises compressing said photovoltaic panel to generate at least one fracture line in said cover layer.

Preferably said method comprises heating said photovoltaic panel to bring said support layer to a temperature higher than a softening temperature of said polymer material, and more preferably lower than a fusion temperature of said polymer material.

Preferably said method comprises, subsequent to said compressing and said heating, bending said photovoltaic panel to generate a first bending moment acting on at least one portion of said support layer with said first face of said support layer in compression, to separate (at least part of) said glass material of said cover layer from said first face of said support layer.

According to another aspect the invention relates to a machine for the recovery of glass material from a decommissioned photovoltaic panel.

Preferably said machine comprises a compression station structured to compress said photovoltaic panel to generate at least one fracture line in said covering layer.

Preferably said machine comprises a heating station structured to heat said photovoltaic panel to bring said support layer to a temperature higher than a softening temperature of said polymer material and more preferably less than a fusion temperature of said polymer material.

Preferably said machine comprises a bending station structured to bend said compressed photovoltaic panel with said heated support layer to generate a first bending moment acting on at least a portion of said support layer with said first face of said support layer under compression, to separate said glass material of said covering layer from said first face of said support layer.

According to the Applicant, the above phases allow separating (at least partially) the glass material of the covering layer from the rest of the panel in a manner efficient in terms of desired degree of purity obtainable, with desired high processing speed of the panel, low costs and limited structural complication, for example without the employment of specific tools for the separation of said glass material.

Indeed, thanks to the compression of the panel for generating said at least one fracture line, it is possible to weaken the covering layer, facilitating the subsequent separation thereof, as described below.

Moreover, heating the support layer to said temperature greater than the softening temperature, but avoiding the melting thereof, allows reducing the stiffness of the support layer in order to facilitate the subsequent bending.

Finally, bending the photovoltaic panel generating said first bending moment on the portion of support layer, with the first face (in correspondence of said portion of the support layer) in compression, allows separating the glass material (e.g. at least the glass material substantially in correspondence of the portion of the support layer) from the support layer.

Without wishing to be bound to any theory, the Applicant indeed considers that by bending the panel as described above, namely by flexing the portion of the support layer in such a manner that the first face (namely the face adjacent to the covering layer) is placed in compression. In this event, the polymeric material of the first face, previously softened, is able to follow the imposed bending stress by compressing exactly in correspondence of said first face. However, the glass material, due to the higher stiffness thereof (e.g. at typical process temperatures), is not able to follow the imposed stress, namely is not able to compress in correspondence of the first face. It follows that the glass layer detaches from the first face of the support layer, being therefore able to be recovered.

The present invention, in one or more of the aspects thereof, may comprise the following preferred features.

Preferably said machine is devoid of mechanical members structured to mechanically act on said panel to scrape said glass material of said covering layer from said first face of said support layer. Preferably said method comprises performing said separating (at least part of) said glass material of said covering layer from said first face of said support layer without the aid of said mechanical members.

Preferably said method comprises advancing said photovoltaic panel along an advancing direction.

Preferably said machine is structured to advance said photovoltaic panel along an advancing direction.

Preferably said bending said photovoltaic panel is performed during said advancing said photovoltaic panel to consecutively generate over time said first bending moment acting on a plurality of contiguous portions of said support layer, including said at least a portion. Preferably said bending station is structured to bend said photovoltaic panel during said advancing said photovoltaic panel to consecutively generate over time said first bending moment acting on a plurality of contiguous portions of said support layer, including said at least a portion. In this manner the effectiveness of separation of the glass material is improved.

Preferably said compressing and/or said heating said photovoltaic panel are performed during said advancing said photovoltaic panel. Preferably said compression station and/or said heating station are structured to respectively compress and/or heat said photovoltaic panel during said advancing said photovoltaic panel. In this manner the process yield is improved.

Preferably said bending station is arranged downstream of said compression station and of said heating station with respect to said advancing direction. In this manner the treatment speed of the single panel is increased.

In one embodiment one or more of (preferably all) said compressing, said heating and said bending are performed with said photovoltaic panel stationary (e.g. in a determined spatial position). In this manner the encumbrances of the machine are reduced. Preferably at least one between, more preferably both, said compressing and said heating said photovoltaic panel is performed with said covering layer facing downward. In this manner the panel is suitably arranged to limit the dispersion of the glass.

Preferably said compression station comprises a pair of compression rollers, each compression roller being rotatable around a respective central axis of symmetry. Preferably said compression rollers are mutually arranged side by side (with said axes parallel).

Preferably each compression roller comprises an outer surface and a respective plurality of protrusions formed on said outer surface.

Preferably each protrusion has main development substantially parallel to said respective central axis.

Preferably said respective central axes of each compression roller are arranged substantially perpendicular to said advancing direction. In this manner the compressing of the photovoltaic panel occurs in a simple and effective manner.

Preferably said compression rollers have said respective pluralities of protrusions interleaved with each other. In this manner the generating of said at least one fracture line is facilitated.

Preferably a distance between said respective central axes of said compression rollers is greater than a sum of the radii of each compression roller. Said distance enables generating sufficient space to insert the panel between the rollers.

Preferably said compression station comprises one or more further pairs of compression rollers. Preferably each further pair of compression rollers has one or more, more preferably all, the above characteristics of said pair of compression rollers. In this manner the compression by the rollers and the generating of the fracture lines are improved.

Preferably said pair of compression rollers and said one or more further pairs of compression rollers are arranged in spatial succession along said advancing direction. In this manner they are suitably arranged.

Preferably said advancing said photovoltaic panel is performed by means of one or more of said pair of compression rollers and said one or more further pairs of compression rollers. In this manner the machine is rational.

Preferably said heating station comprises an infrared lamp. In this manner the heating occurs in an effective manner.

In one embodiment said lamp is arranged along said advancing direction to be, in use, directed (directly) towards said covering layer of said photovoltaic panel. In other words, in use, said lamp is arranged inferiorly to said photovoltaic panel (directed towards the glass covering layer). In this manner the heating of the panel is improved. Preferably said panel comprises a base support arranged in correspondence with, more preferably adjacent to, a second face of said support layer opposite to said first face.

In one embodiment said lamp is arranged along said advancing direction to be, in use, directed (directly) towards said base support of said photovoltaic panel. In other words, in use, said lamp is arranged superiorly to said photovoltaic panel (directed towards said base support).

Alternatively, if the base support is removed from the panel before the heating of the panel itself, said lamp may be arranged so as to be directly facing said support layer (superiorly to the panel, directed downward).

The above arrangements of the lamps superiorly to the panel allow limiting possible soiling of the lamps, with consequent improvement of the energy consumption.

Preferably said heating station comprises one or more further infrared lamps arranged in succession along said advancing direction with said infrared lamp.

Preferably said compression station and said heating station extend along substantially the same section of a path of said panel along said advancing direction. In this manner the machine is compact.

Preferably said pair of compression rollers is arranged directly upstream of said lamp with respect to said advancing direction. In this manner the machine is structurally simple.

Preferably said one or more further pairs of compression rollers and said one or more further infrared lamps are arranged downstream of said infrared lamp, more preferably in mutual alternating succession along said advancing direction. In this manner the machine is compact and highly rational. In this manner moreover the compressing and the heating of the panel are improved.

Preferably said bending station comprises a bending guide having an arc-shaped development.

Preferably said development of said guide has radius greater than or equal to 20 mm, more preferably greater than or equal to 40 mm and/or less than or equal to 200 mm, more preferably less than or equal to 100 mm. Such values have proved to be particularly useful to generate the bending of the panel.

Preferably said bending guide comprises at least a curved surface. The Applicant has realized that a single curved surface is sufficient to bend the panel as desired, and at the same time to guide the panel towards the subsequent stations.

In one embodiment said bending guide comprises a pair of curved surfaces mutually concentric and arranged at a mutual distance. In this manner the panel is confined between the two curved surfaces, facilitating the bending and/or limiting the scattering of glass fragments.

Preferably said bending guide has length along a circumferential direction that subtends a central angle greater than or equal to 20°, more preferably greater than or equal to 45°, even more preferably greater than or equal to 60°, and/or less than or equal to 180°, more preferably less than or equal to 160°, even more preferably less than or equal to 100°. In this manner the efficiency of removal of the glass provided by the bending is improved.

Preferably said bending guide comprises an exit mouth.

Preferably said method comprises, during said bending said photovoltaic panel, further bending said photovoltaic panel to generate a further first bending moment acting on at least a further portion of said support layer with said first face of said support layer in compression, said further portion being arranged directly downstream of said at least one portion with respect to said advancing direction. The Applicant has realized that the combination of the bending and of the further bending synergistically promotes the detachment of the glass material from the support layer.

Preferably said further first bending moment has modulus greater than or equal to said first bending moment. In this manner the effectiveness of separation of the glass material of the covering layer from the support layer is further improved.

Preferably said further bending said photovoltaic panel is performed cyclically over time during said advancing said photovoltaic panel to cyclically generate over time said further first bending moment on a respective plurality of further portions of said support layer (preferably mutually non-contiguous), including said at least a further portion. In other words, said further first bending moment is generated at a determined frequency over time during said advancing of the panel on only some portions (typically mutually non-contiguous). The Applicant has realized that in this manner the effectiveness of separation of the glass material is further improved.

Preferably said bending station is structured to, during said bending said photovoltaic panel, further bend said photovoltaic panel to generate a further first bending moment acting on at least a further portion of said support layer with said first face of said support layer in compression, said further portion being arranged directly downstream of said at least one portion with respect to said advancing direction. Preferably said bending station is structured to perform said further bending said photovoltaic panel cyclically over time during said advancing said photovoltaic panel to cyclically generate over time said further first bending moment on a respective plurality of further portions of said support layer (mutually non-contiguous), including said at least a further portion. Preferably said bending station comprises a pushing body.

Preferably said pushing body is arranged directly downstream of said bending guide with respect to said advancing direction, more preferably in correspondence with said exit mouth of said bending guide.

Preferably said pushing body is movable to alternately and cyclically over time assume a retracted configuration and a pushing configuration. Preferably in said pushing configuration said pushing body exerts a force on a portion of said photovoltaic panel exiting from said bending guide to cyclically generate over time said further first bending moment.

Preferably said method comprises, subsequent to said bending said photovoltaic panel, bending said photovoltaic panel to generate a second bending moment acting on said at least one portion of said support layer with said first face of said support layer in tension. In other words, the portion of the support layer is first bent according to the first bending moment (with the first face in compression), and subsequently according to the second bending moment (with the first face in tension). In this manner the Applicant has verified that the separation of the glass material from the first face of the support layer is further improved.

Preferably said bending station is further structured to bend said photovoltaic panel to generate, subsequent to said first bending moment, a second bending moment acting on said at least one portion of said support layer, with said first face of said support layer in tension. In this manner the separation of the glass material is further improved, for example of the glass material possibly not yet separated by the previous bending (and further bending). Indeed, to the mechanical compression stress caused by the previous bending and further bending a further mechanical tension stress on the same portion of the covering layer is added, promoting the detachment of the glass material. Preferably said bending station comprises one or more respective bending rollers arranged along said advancing direction to, in use, bend said photovoltaic panel to generate said second bending moment on said at least a portion of said support layer of said photovoltaic panel.

Preferably said method comprises, subsequent to said bending said photovoltaic panel to generate said first bending moment, more preferably subsequent also to said bending said photovoltaic panel to generate said second bending moment, brushing said support layer in correspondence with said first face, even more preferably during said advancing said photovoltaic panel. In this manner the separation of the glass material is further promoted.

Preferably said bending said photovoltaic panel is performed during said advancing said photovoltaic panel to consecutively generate over time said second bending moment acting on said plurality of portions of said support layer mutually contiguous, including said at least one portion. Preferably said bending station is structured to bend said photovoltaic panel during said advancing said photovoltaic panel to consecutively generate over time said second bending moment acting on said plurality of portions of said support layer mutually contiguous, including said at least a portion. In this manner the effectiveness of separation of the glass material is improved.

Preferably said machine comprises a brushing device arranged downstream of said bending station with respect to said advancing direction and structured to brush said support layer in correspondence with said first face.

Preferably said brushing device is rotationally fixed to a frame of said machine to rotate around a respective axis of rotation.

Preferably said brushing device comprises an external surface having cylindrical symmetry with respect to said axis of rotation and preferably a plurality of protrusions extending from said external surface. Preferably said plurality of protrusions extends in a radial direction with respect to said respective axis of rotation. In this manner the effectiveness of the brushing is improved.

In one embodiment each protrusion has rhomboidal shape with a diagonal arranged along a circumferential direction with respect to said axis of rotation. In this manner the brushing performance of the panel is improved.

Preferably said method comprises recovering by gravity said covering layer separated from said support layer of said photovoltaic panel. In this manner the collection is simple.

Preferably said machine comprises one or more containers arranged along said advancing direction structured to recover by gravity said covering layer separated from said support layer of said photovoltaic panel.

### Brief description of the figures

Figure 1 schematically shows a machine for the recovery of glass material from a decommissioned photovoltaic panel according to the present invention;
Figure 2 shows a perspective view of the machine of Figure 1;
Figure 3 schematically shows a photovoltaic panel.

### Detailed description of some embodiments of the invention

The features and the advantages of the present invention will be further clarified by the following detailed description of some embodiments, presented by way of example and not limiting of the present invention, with reference to the attached figures.

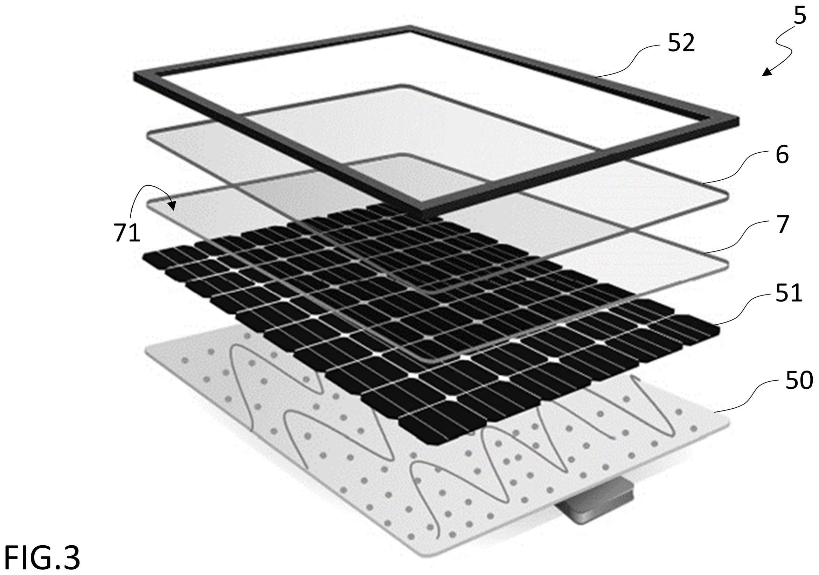

Exemplarily, as shown in Figure 3, a photovoltaic panel 5 typically comprises (starting from the base of the panel upwards) a base support 50 made of polymer material, a layer of photovoltaic cells 51 made of silicon, a support layer 7 adhered to the photovoltaic cells, and a covering layer 6 made of glass material arranged superiorly to the support layer 7 to protect the latter and the photovoltaic cells. The support layer 7 is typically made of polymer material (preferably EVA) and comprises a first face 71 adjacent to and in contact with the covering layer 6.

The panel typically also comprises a protection frame 52, for example made of metal alloy.

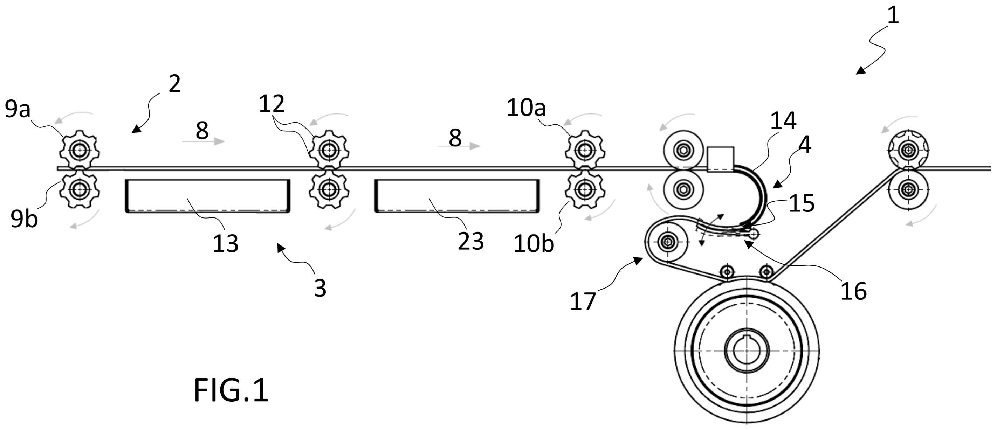

With reference to Figure 1, it schematically shows a machine 1 for the recovery of glass material from a decommissioned photovoltaic panel 5 according to the present invention.

The machine 1 is exemplarily structured to advance the photovoltaic panel 5 along an advancing direction 8.

Exemplarily the machine 1 comprises a compression station 2 structured to compress the photovoltaic panel 5 to generate at least one fracture line (not shown) in the covering layer 6 during the advancing of the photovoltaic panel 5.

Exemplarily the compression station 2 comprises a pair of compression rollers 9a, 9b, each compression roller 9a, 9b being rotatable around a respective central axis of symmetry 11 arranged substantially perpendicular to the advancing direction 8. The compression rollers 9a, 9b are arranged side by side with the respective central axes 11 parallel.

Exemplarily each compression roller 9a, 9b comprises an outer surface and a respective plurality of protrusions 12 formed on the outer surface and having main development substantially parallel to the respective central axis 11.

Exemplarily the compression rollers 9a, 9b have the respective pluralities of protrusions 12 interleaved with each other.

Exemplarily a distance between the respective central axes 11 of the compression rollers 9a, 9b is greater than a sum of the radii of each compression roller 9a, 9b. In particular, the distance between the respective central axes 11 must guarantee the insertion of the photovoltaic panel 5 between the pair of compression rollers 9a, 9b.

Exemplarily the compression station 2 further comprises two further pairs of compression rollers 10a, 10b, each further pair of compression rollers 10a, 10b having exemplarily all the above characteristics of the pair of compression rollers 9a, 9b.

Exemplarily the pair of compression rollers 9a, 9b and the further pairs of compression rollers 10a, 10b are arranged in spatial succession along the advancing direction 8 spaced so as to guarantee the gripping of the photovoltaic panel 5 by at least two adjacent pairs of compression rollers.

Exemplarily the machine 1 comprises a heating station 3 structured to heat the photovoltaic panel 5 to bring the support layer 7 to a temperature higher than a softening temperature of the polymer material and lower than a melting temperature of the polymer material. For example, the heating station 3 brings the support layer 7 to a temperature higher than 90°C and lower than 150°C, for example equal to about 115°C, equal to the softening temperature of EVA.

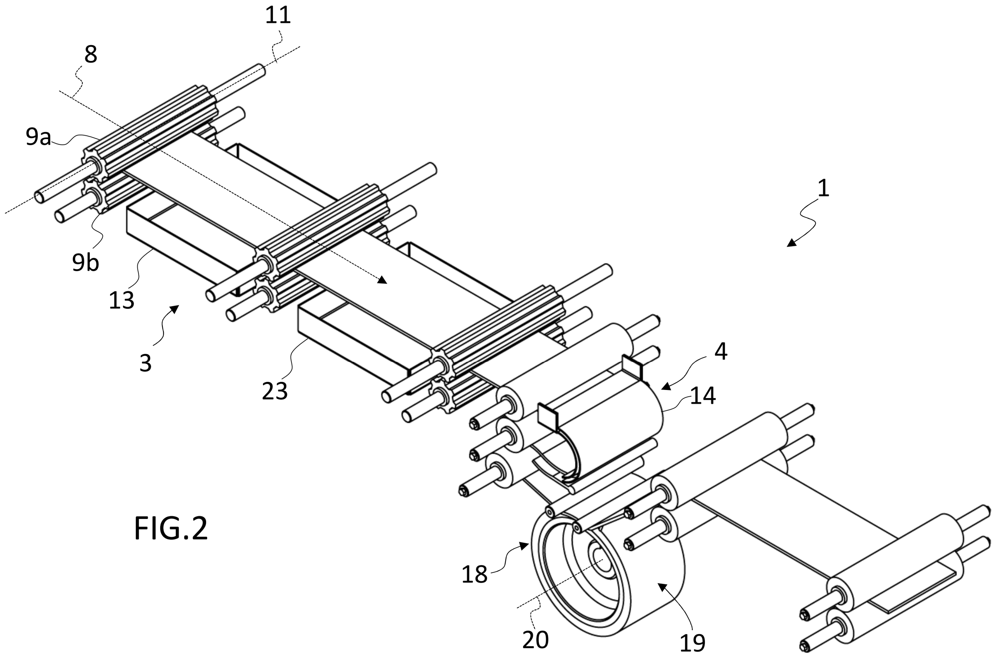

Exemplarily, as shown in Figures 1 and 2, the heating station 3 comprises an infrared lamp 13 arranged along the advancing direction 8 to be, in use, directed directly towards the covering layer 6 of the photovoltaic panel 5.

Exemplarily the heating station 3 further comprises a further infrared lamp 23 arranged in succession along the advancing direction 8 with the infrared lamp 13. For example, the infrared lamp 13 and the further infrared lamp 23 each deliver a power equal to about 4 kW.

In the embodiment shown both infrared lamps 13, 23 are arranged inferiorly to the panel, directed upward, namely directly towards the covering layer 6. In one embodiment (not shown), the lamp 13 and the further lamp 23 are arranged along the advancing direction 8 to be, in use, both directed towards the base support 50 made of polymer material. In such embodiment, the heating station 3 heats the support layer 7 to the desired temperature by generating a temperature difference between the base support 50 and the covering layer 6 of the photovoltaic panel 5 greater than or equal to 80°C.

Alternatively, if the base support 50 is removed from the panel 5 before the heating of the panel itself, the lamp (as well as the further lamp) may be arranged so as to be directly facing the support layer 7 left uncovered (namely arranged superiorly to the panel, directed downward).

Exemplarily the compression station 2 and the heating station 3 extend along substantially the same section of a path of the panel 5 along the advancing direction 8, preferably an initial section.

More in detail, exemplarily the pair of compression rollers 9a, 9b is arranged directly upstream of the lamp 13 with respect to the advancing direction 8 and the further pairs of compression rollers 10a, 10b and the further infrared lamp 23 are arranged downstream of the infrared lamp 13 in mutual alternating succession along the advancing direction 8.

Exemplarily the compression station 2 and the heating station 3 are structured to respectively compress and heat the photovoltaic panel 5 during the advancing of the photovoltaic panel 5, as will be better described below.

Exemplarily the machine 1 comprises a bending station 4 arranged downstream of the compression station 2 and of the heating station 3 with respect to the advancing direction 8, in particular directly downstream of the further pair of compression rollers 10a, 10b most distal from the pair of compression rollers 9a, 9b.

Exemplarily the bending station 4 is structured to, during the advancing of the panel, bend the photovoltaic panel 5 compressed and with the support layer 7 heated, to consecutively generate over time a first bending moment acting on a plurality of portions of the support layer 7 mutually contiguous. More in detail, said first bending moment is generated on each portion of the support layer with the first face 71 of the support layer 7 in compression.

Exemplarly the bending station 4 comprises a bending guide 14 having arc-shaped development with radius equal to about 50 mm.

Exemplarily the bending guide 14 comprises at least one curved surface, more in detail a pair of curved surfaces mutually concentric and arranged at a mutual distance. Exemplarily the bending guide further comprises an exit mouth 15.

Exemplarily the bending guide 14 has length along a circumferential direction that subtends a central angle equal to about 120°.

Exemplarily the bending station 4 is structured to, during the bending of the panel 5 (and therefore also during the advancing thereof), further bend the photovoltaic panel 5 cyclically over time to cyclically generate over time a further first bending moment acting on a respective plurality of further portions of the support layer 7, exemplarily mutually non-contiguous.

To this end, the bending station 4 exemplarily comprises a pushing body 16 arranged directly downstream of the bending guide 14 with respect to the advancing direction 8, in correspondence with the exit mouth 15 of the bending guide 14.

Exemplarily the pushing body 16 is movable to alternately and cyclically over time assume a retracted configuration, in which it can contact the panel in motion without generating significant bending moments on the panel 5, and a pushing configuration, in which the pushing body 16 contacts the panel 5 and exerts a force on a portion of the photovoltaic panel 5 exiting from the bending guide 14 to cyclically generate over time the further first bending moment as described above. For example, the further first bending moment is, in modulus, greater than the first bending moment.

Exemplarily the bending station 4 is further structured to bend the photovoltaic panel 5 to generate, exemplarily subsequent to the first bending moment and to the further first bending moment, a second bending moment acting on the plurality of portions of the support layer 7, with the first face 71 of the support layer 7 in tension.

To this end, the bending station 4 exemplarily comprises a bending roller 17 arranged along the advancing direction 8 to, in use, bend the photovoltaic panel 5 to generate said second bending moment, for example by appropriate engagement of the panel around the bending roller 17 and other rollers arranged downstream thereof. In particular, the bending roller 17 is exemplarily arranged directly downstream of the pushing body 16 along the advancing direction 8.

Exemplarily the machine 1 comprises a brushing device 18 arranged downstream of the bending station 4 with respect to the advancing direction 8 and structured to brush the support layer 7 in correspondence with the first face 71.

Exemplarily the brushing device 18 is rotationally fixed to a frame (not shown) of the machine 1 to rotate around a respective axis of rotation 20.

Exemplarily the brushing device 18 comprises an external surface 19 having cylindrical symmetry with respect to the respective axis of rotation 20 and a plurality of protrusions (not shown) extending from the external surface 19. Exemplarily the plurality of protrusions extends in a radial direction with respect to the respective axis of rotation 20.

In one embodiment, not shown, each protrusion has rhomboidal shape with a diagonal arranged along a circumferential direction at the axis of rotation 20.

In one embodiment, not shown, each protrusion may have any shape, such as for example rectangular, square (e.g. with a pair of sides parallel to the circumferential direction), cylindrical, triangular, or the external surface of the brushing device may be devoid of protrusions.

In a further embodiment, not shown, the brushing device comprises a plurality of bristles (in place of the protrusions).

Exemplarily the machine 1 comprises one or more containers (not shown in the figure) arranged along the advancing direction 8 structured to recover by gravity the glass material of the covering layer 6 separated from the support layer 7 of the photovoltaic panel 5.

In use, the machine 1 enables performing a method for the recovery of glass material from a decommissioned photovoltaic panel 5.

Exemplarily it is initially provided to provide the photovoltaic panel 5, to insert it between the pair of compression rollers 9a, 9b with the covering layer 6 facing downward, in order to advance the panel along the advancing direction 8 and simultaneously compress the panel 5 to generate one or more fracture lines, namely cracks or fissures in the glass layer, without however causing for the moment the massive detachment of glass fragments from the panel 5.

Exemplarily the photovoltaic panel 5 is further advanced also by means of the two further pairs of compression rollers 10a, 10b, also aimed at compressing the panel meanwhile to fragment the covering layer 6, while however also in this case keeping it substantially adhered to the support layer 7.

Exemplarily the panel is overall further advanced also by further rollers and/or pairs of flat rollers (without protrusions), such as for example shown in Figures 1 and 2. Exemplarily the method further comprises, by means of the heating station 3, heating the photovoltaic panel 5 to bring the support layer 7 to softening.

To this end, after passing through the pair of compression rollers 9a, 9b, the photovoltaic panel 5 advances exemplarily in sequence above the infrared lamp 13 and the further infrared lamp 23.

Exemplarily the method comprises, subsequent to the compressing and to the heating of the panel, bending, by means of the bending station 4, the photovoltaic panel 5 to generate the first bending moment acting on the at least one portion of the support layer 7 with the first face 71 of the support layer 7 in compression.

To this end the photovoltaic panel 5 is conveyed inside the two curved surfaces of the bending guide 14.

In detail therefore, the method exemplarily comprises bending the photovoltaic panel 5 during the advancing thereof to consecutively generate over time the first bending moment on the plurality of portions of the support layer 7 mutually contiguous (and at least partially overlapping), including the at least one portion. The portion of support layer that is from time to time located inside the bending guide 14 being the portion that is subjected to the bending and therefore to the first bending moment.

Exemplarily the method further comprises, during the bending of the photovoltaic panel 5, further bending the photovoltaic panel 5 to generate the further first bending moment acting on the at least one further portion of the support layer 7, arranged directly downstream of the at least one portion with respect to the advancing direction 8, with the first face 71 of the support layer 7 in compression.

More in detail, further bending the panel is performed cyclically over time during the advancing of the photovoltaic panel 5 to cyclically generate over time the further first bending moment on a respective plurality of further portions of the support layer 7 mutually non-contiguous, including the at least one further portion described above.

To this end, the photovoltaic panel 5, during the advancing along the advancing direction 8, is exemplarily subjected cyclically over time, by means of the cyclic movement over time of the pushing body 16, to a further bending that is added to the bending performed by the bending guide 14. Such sum of effects generates over time a further flexure of the support layer followed by a subsequent relaxation while the panel continues to be bent by the bending guide 14 during the advancing motion thereof, generating the first bending moment. Such pulsed effect of further bending and relaxation (i.e. further first bending moment cyclic over time) added to the bending generated by the bending guide 14 (i.e. first bending moment) synergistically contributes to the detachment of the glass material from the panel with desired efficiency.

Exemplarily the method comprises, subsequent to the bending of the photovoltaic panel 5 and to the further bending, bending the photovoltaic panel 5, by means of the bending station 4, to generate a second bending moment acting on the at least one portion of the support layer 7 with the first face 71 of the support layer 7 in tension.

To this end, the photovoltaic panel 5, after being subjected to the action of the pushing body 16, is directed towards the bending roller 17.

More in detail, bending the panel to generate the second bending moment is performed during the advancing of the panel 5 with the second bending moment acting on the plurality of portions of the support layer on which the first bending moment has previously acted.

Exemplarily the method comprises, subsequent to the bending of the photovoltaic panel 5 to generate the second bending moment, brushing, by means of the brushing device 18, the support layer 7 in correspondence with the first face 71. To this end, the photovoltaic panel 5 is advanced along the advancing direction 8 by two respective rollers and brushed by the brushing device.

Exemplarily the method comprises recovering by gravity the covering layer 6 separated from the support layer 7 by means of the one or more containers arranged along the advancing direction 8.

The present invention, thanks to the bending of the panel to generate (at least) the first bending moment, allows separating the glass material from the support layer of the photovoltaic panel without the aid of mechanical abrasion members, and therefore without the related costs, encumbrances, and maintenance.

## Claims

1. Machine (1) for the recovery of glass material from a decommissioned photovoltaic panel (5) comprising at least a covering layer (6) made of glass material and a support layer (7) made of polymer material having a first face (71) adjacent to and in contact with said covering layer (6), wherein said machine (1) comprises:
- a compression station (2) structured to compress said photovoltaic panel (5) to generate at least one fracture line in said covering layer (6);
- a heating station (3) structured to heat said photovoltaic panel (5) to bring said support layer (7) to a temperature higher than a softening temperature of said polymer material; and
- a bending station (4) structured to bend said compressed photovoltaic panel (5) with said heated support layer to generate a first bending moment acting on at least a portion of said support layer (7) with said first face (71) of said support layer (7) under compression, to separate said glass material of said covering layer (6) from said first face (71) of said support layer (7).

2. Machine (1) according to claim 1, structured to advance said photovoltaic panel (5) along an advancing direction (8), wherein said compression station (2) comprises a pair of compression rollers (9a, 9b), each compression roller (9a, 9b) being rotatable around a respective central axis (11) of symmetry, wherein said compression rollers (9a, 9b) are mutually arranged side by side, wherein each compression roller (9a, 9b) comprises an outer surface and a respective plurality of protrusions (12) formed on said outer surface, wherein each protrusion (12) has main development substantially parallel to said respective central axis (11), wherein said respective central axes (11) of each compression roller (9a, 9b) are arranged substantially perpendicular to said advancing direction (8), wherein said compression rollers (9a, 9b) have said respective pluralities of protrusions (12) interleaved with each other, and wherein a distance between said respective central axes (11) of said compression rollers (9a, 9b) is greater than a sum of the radii of each compression roller (9a, 9b).

3. Machine (1) according to claim 2, wherein said heating station (3) comprises an infrared lamp (13), wherein said lamp (13) is arranged along said advancing direction (8) to be, in use, directed directly towards said covering layer (6) of said photovoltaic panel (5), wherein said compression station (2) and said heating station (3) extend along substantially the same section of a path of said panel (5) along said advancing direction (8), wherein said pair of compression rollers (9a, 9b) is arranged directly upstream of said lamp (13) with respect to said advancing direction (8).

4. Machine (1) according to any one of the previous claims, wherein said bending station (3) comprises a bending guide (14) having an arc-shaped development with a radius greater than or equal to 20 mm and less than or equal to 200 mm, wherein said bending guide (14) comprises at least a curved surface, and wherein said bending guide (14) has length along a circumferential direction that subtends a central angle greater than or equal to 20° and less than or equal to 180°.

5. Machine (1) according to any one of the previous claims, wherein said bending station (4) is structured to, during said bending said photovoltaic panel (5), further bend said photovoltaic panel (5) to generate a further first bending moment acting on at least a further portion of said support layer (7) with said first face (71) of said support layer (7) in compression, said further portion being arranged directly downstream of said at least a portion with respect to an advancing direction (8) of said photovoltaic panel (5).

6. Machine (1) according to claim 5, wherein said bending station (4) is structured to perform said further bending of said photovoltaic panel (5) cyclically over time during said advancing of said photovoltaic panel (5) to cyclically generate said further first bending moment over time on a respective plurality of further portions of said support layer (7), including said at least a further portion.

7. Machine (1) according to claim 4 and claim 5 or 6, wherein said bending guide (14) comprises an exit mouth (15), wherein said bending station (4) comprises a pushing body (16), wherein said pushing body (16) is arranged directly downstream of said bending guide (14) with respect to said advancing direction (8) at said exit mouth (15) of said bending guide (14), and wherein said pushing body (16) is movable to alternately and cyclically over time assume a retracted configuration and a pushing configuration in which said pushing body (16) exerts a force on a portion of said photovoltaic panel (5) exiting from said bending guide (14) to cyclically generate said further first bending moment over time.

8. Machine (1) according to any one of the previous claims, wherein said bending station (4) is further structured to bend said photovoltaic panel (5) to generate, subsequent to said first bending moment, a second bending moment acting on said at least a portion of said support layer (7), with said first face (71) of said support layer (7) in tension.

9. Machine (1) according to claim 8, wherein said bending station (4) comprises one or more respective bending rollers (17) arranged along an advancing direction (8) of the photovoltaic panel (5) to, in use, bend said photovoltaic panel (5) to generate said second bending moment on said at least a portion of said support layer (7) of said photovoltaic panel (5).

10. Machine (1) according to any one of the previous claims, comprising a brushing device (18) arranged downstream of said bending station (4) with respect to an advancing direction (8) of the photovoltaic panel (5) and structured to brush said support layer (7) in correspondence with said first face (71), wherein said brushing device (18) is rotationally fixed to a frame of said machine (1) to rotate around a respective axis of rotation (20), and wherein said brushing device (18) comprises an external surface (19) having cylindrical symmetry with respect to said axis of rotation (20) and a plurality of protrusions extending from said external surface (19).

11. Method for recovering glass material from a decommissioned photovoltaic panel (5) comprising at least a cover layer (6) made of glass material and a support layer (7) made of polymer material having a first face (71) adjacent to and in contact with said cover layer (6), wherein said method comprises the steps of:
- providing said photovoltaic panel (5);
- compressing said photovoltaic panel (5) to generate at least one fracture line in said cover layer (6);
- heating said photovoltaic panel (5) to bring said support layer (7) to a temperature higher than a softening temperature of said polymer material;
- subsequent to said compressing and said heating, bending said photovoltaic panel (5) to generate a first bending moment acting on at least one portion of said support layer (7) with said first face (71) of said support layer (7) in compression to separate said glass material of said cover layer (6) from said first face (71) of said support layer (7).

12. Method according to claim 11, comprising advancing said photovoltaic panel (5) along an advancing direction (8), wherein said bending said photovoltaic panel (5) is performed during said advancing said photovoltaic panel (5) to consecutively generate over time said first bending moment acting on a plurality of contiguous portions of said support layer (7), including said at least a portion, wherein said compressing and/or said heating said photovoltaic panel (5) are performed during said advancing said photovoltaic panel (5).

13. Method according to claim 11 or 12, comprising during said bending said photovoltaic panel (5), further bending said photovoltaic panel (5) to generate a further first bending moment acting on at least a further portion of said support layer (7) with said first face (71) of said support layer (7) in compression, said further portion being arranged directly downstream of said at least a portion with respect to said advancing direction (8), wherein said further bending said photovoltaic panel (5) is performed cyclically over time during said advancing said photovoltaic panel (5) to cyclically generate over time said further first bending moment on a respective plurality of further portions of said support layer (7), including said at least a further portion.

14. Method according to any one of the previous claims from 11 to 13, wherein said method comprises, subsequent to said bending said photovoltaic panel (5), bending said photovoltaic panel (5) to generate a second bending moment acting on said at least a portion of said support layer (7) with said first face (71) of said support layer (7) in tension.

15. Method according to any one of the previous claims from 11 to 14, wherein said method comprises, subsequent to said bending said photovoltaic panel to generate said first bending moment, brushing said support layer (7) at said first face (71).
